# EUROPEAN PATENT SPECIFICATION

(11) **EP 4 399 563 B1**
(45) Date of publication and mention of the grant of the patent: **19.08.2026**
(21) Application number: 22778156.4
(22) Date of filing: 07.09.2022
(51) Int. Cl.: G02B 27/01, G02F 1/29, G02B 27/00, G02F 1/00

(54) **LIQUID CRYSTAL EYEBOX STEERING IN WAVEGUIDE BASED EYEWEAR DISPLAYS**
FLÜSSIGKRISTALL-AUGENBOX-STEUERUNG IN WELLENLEITERBASIERTEN BRILLENANZEIGEN
ORIENTATION DE RÉGION OCULAIRE À CRISTAUX LIQUIDES DANS DES AFFICHAGES DE LUNETTES À BASE DE GUIDE D'ONDES

(30) Priority: 08.09.2021 US 202163241642 P
(43) Date of publication of application: 17.07.2024
(73) Proprietor: Google LLC, Mountain View, CA 94043 (US)
(72) Inventor: CAKMAKCI, Ozan, Mountain View, California 94043 (US); BODIYA, Timothy Paul, Shanghai 200120 (CN)
(74) Representative: Maikowski & Ninnemann Patentanwälte Partnerschaft mbB
(86) International application number: PCT/US2022/042694
(87) International publication number: WO 2023/038928

(56) References cited:
- US-A1- 2020 049 996
- US-A1- 2021 240 051

## Description

### BACKGROUND

In order to provide a satisfactory experience for a wide population of users, the eyebox associated with a wearable head-mounted display (WHMD) device has to be large enough to accommodate variations in user head geometries. For example, the design of WHMDs needs to account for differences, among different potential users, in the distance between the eyes (referred to as interpupillary distance, or IPD), head width, ear apex, and nose width in the general population. Typically, a width of the eyebox of a WHMD is on the order of at least approximately 10 mm to accommodate these different head geometries, where the IPD distribution alone can be in the range of about +/- 8 mm within about two standard deviations of the mean IPD, for example. Conventional waveguide based WMHDs typically account for such a distribution by sizing an outcoupler grating of a waveguide of the WHMD to accommodate the different user head sizes. For example, a larger outcoupler size is used to accommodate a wider range of user head geometries. However, having a single outcoupler size for a wide range of user head geometries results in reduced efficiency and color uniformity in the projected light that is outcoupled to the user in addition to fabrication challenges and increased costs. US 2021/240051 A1 discloses an eyebox expander for a wearable head-mounted display useful for understanding the invention.

### SUMMARY

The present disclosure describes embodiments of an eyebox expander for a wearable head mounted display (WHMD).

In one example embodiment, an eyebox expander for a WHMD includes a first liquid crystal layer, an electrode arrangement to apply a voltage to the first liquid crystal layer to modify an orientation associated with the first liquid crystal layer, and a compensation layer to redirect light passing through the eyebox expander based on the modification of the orientation associated with the first liquid crystal layer.

In some embodiments, the eyebox expander includes that the electrode arrangement includes a patterned electrode. In some embodiments, the patterned electrode is located between a first electrode and a second electrode. In some embodiments, the first liquid crystal layer is located between the patterned electrode and the second electrode. In some embodiments, the second electrode receives light from the first liquid crystal layer and transmits light toward an eyebox associated with the WHMD based on the modification of the orientation associated with the first liquid crystal layer. In some embodiments, the patterned electrode comprises a plurality of electrode sections arranged to form an aperture. In some embodiments, the electrode arrangement applies the first voltage as a plurality of voltages across the plurality of electrode sections of the patterned electrode. In some embodiments, the electrode arrangement is configured to apply the first voltage between the second electrode and the patterned electrode. In some embodiments, the compensation layer is located between the first electrode and the patterned electrode. In some embodiments, the compensation layer is a second liquid crystal layer. In some embodiments, the electrode arrangement is configured to apply a second voltage to the second liquid crystal layer based on the first voltage applied to the first crystal layer. In some embodiments, the modification of the orientation associated with the first liquid crystal layer is based on a condition associated with an eyebox of the WHMD. For example, the condition associated with the eyebox is based on at least one of a variation in an interpupillary distance of a user of the WMHD, a variation in eye relief between the WHMD and the user, or an eye movement of the user. In some embodiments, light input to the eyebox expander from outside the WHMD (e.g., ambient light) and light output from the eyebox expander in a direction of a user have a same angle within a margin of difference.

In another example embodiment, a lens for a WHMD includes a first substrate, a second substrate, and an eyebox expander between the first substrate and the second substrate. The eyebox expander includes a first liquid crystal layer, an electrode arrangement to apply a voltage to the first liquid crystal layer to modify an orientation associated with the first liquid crystal layer, and a compensation layer to redirect light passing through the eyebox expander based on the modification of the orientation associated with the first liquid crystal layer.

In some embodiments, the lens for the WHMD includes a waveguide including an incoupler, an exit pupil expander, and an outcoupler, the waveguide located between the first substrate and the second substrate. For example, the eyebox expander is integrated into or partially arranged over each of the incoupler, the exit pupil expander, and the outcoupler.

Another example embodiment describes a method to steer light beams in an eyebox of a wearable head mounted display (WHMD). The method includes applying a first voltage to a first liquid crystal layer to modify an orientation associated with the first liquid crystal layer to steer light beams in an eyebox of the WHMD and applying a second voltage to a second liquid crystal layer to redirect light passing through a lens of the WHMD based on the modification of the orientation associated with the first liquid crystal layer.

In some embodiments, the method further includes applying the first voltage in a series of segmented voltages to the first liquid crystal layer via an electrode arrangement comprising a first electrode, a patterned electrode, and a second electrode. In some embodiments, the first liquid crystal layer is located between the patterned electrode and the second electrode, and the second liquid crystal layer is located in between the first electrode and the patterned electrode, wherein the first liquid crystal layer is located closer in a direction of a user of the WHMD than the second liquid crystal layer.

### BRIEF DESCRIPTION OF THE DRAWINGS

The present disclosure may be better understood, and its numerous features and advantages made apparent to those skilled in the art by referencing the accompanying drawings. The use of the same reference symbols in different drawings indicates similar or identical items.
FIG. 1 shows an example display system having a support structure that houses a projection system configured to project images toward the eye of a user, in accordance with some embodiments.
FIG. 2 shows an example of a block diagram of a projection system that projects light representing images onto the eye of a user via a display system, such as the display system of FIG. 1, in accordance with some embodiments.
FIG. 3 shows an example of a WHMD with an eyebox expander, in accordance with some embodiments.
FIG. 4 show an example of a diagram demonstrating eyebox considerations for liquid crystal beam steering, in accordance with some embodiments.
FIG. 5 shows an example of a schematic diagram illustrating an eyebox expander, in accordance with some embodiments.
FIG. 6 shows an example of a patterned electrode in an electrode arrangement of an eyebox expander, in accordance with some embodiments.
FIG. 7 shows examples of a worldside view and a perspective view of an eyebox expander being integrated into a waveguide, in accordance with some embodiments.
FIG. 8 shows an example of the compensation effects of the compensation layer on see-through light from the real world, in accordance with some embodiments.
FIG. 9 shows a flowchart illustrating a method for an eyebox expander to steer light beams to an eyebox of a WHMD, in accordance with some embodiments.
FIG. 10 shows a flowchart illustrating a method for an eyebox expander to determine a first voltage and/or a second voltage to apply to a first liquid crystal layer and/or a compensation layer, respectively, in accordance with some embodiments.

### DETAILED DESCRIPTION

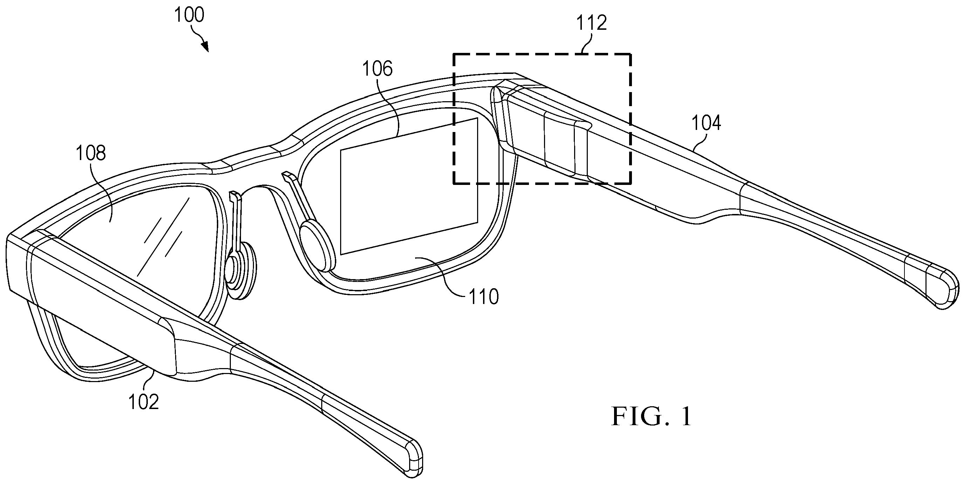

In WHMD design for augmented reality (AR) applications, challenges include sizing the eyebox to accommodate a wide variation in different user head geometries and designing optical see-through displays to effectively guide the projected image to a user while minimizing the distortion of the real world view from the user's perspective. FIGs. 1-10 illustrate techniques for eyebox expansion in a WHMD by steering light beams to a target location, e.g., to the pupil of the user. Additionally, FIGs. 1-10 illustrate techniques to counteract distortion effects on the see-through view of the real world due to the eyebox expansion, such as through the use of a liquid crystal layer to further steer the light beams. Accordingly, the techniques described herein present WHMD devices that provide an improved projected image quality while minimizing the distortion of the real world view, thereby improving the overall user experience.

To illustrate, a lens element of a WHMD includes an eyebox expander. The eyebox expander includes a first liquid crystal layer with a first plurality of crystals. The eyebox expander further includes an electrode arrangement to apply a first voltage to the first liquid crystal layer to modify the orientation associated with the first liquid crystal layer based on a condition associated with an eyebox of the WHMD. For example, this includes modifying the orientation of the first plurality of crystals. In some embodiments, the applied voltage modifies the orientation of the first plurality of crystals to steer light beams generated at a light source of the WHMD. In some embodiments, the condition associated with the eyebox is a target location that corresponds to a detected pupil location of a user of the WHMD. Accordingly, the modification of the orientation of the first plurality of liquid crystals steers the light beams to the target location based on the electrically tunable properties of the first liquid crystal layer. In some cases, this modification of the orientation of the first plurality of crystals can distort the see-through light (also referred to as incident or ambient light) from the real world passing through the lens of the WHMD. To counteract this distortion effect, the eyebox expander also includes a compensation layer. The compensation layer, for example, includes a second liquid crystal layer with a second plurality of liquid crystals. In some embodiments, the electrode arrangement, based on the first voltage applied to the first liquid crystal layer, applies a second voltage to the second liquid crystal layer that modifies the second plurality of crystals to counteract the distortion effects on the light from the real world passing through the eyebox expander. In this manner, the eyebox expander steers the light beams to the target location and counteracts distortion effects on the light from the real-world attributed to the steering of the light beams. This results in a higher projected image quality and a more realistic portrayal of the real world view, thereby improving the overall user experience on multiple levels.

FIGs. 1-10 illustrate embodiments of an example eyebox expander and corresponding techniques for eyebox steering utilizing liquid crystal layers, thereby providing an expandable eyebox for a WHMD without the need to modify or increase the size of the outcoupler grating to fit different user head geometries. However, it will be appreciated that the apparatuses and techniques of the present disclosure are not limited to implementation in this particular display system, but instead may be implemented in any of a variety of display systems using the guidelines provided herein.

FIG. 1 illustrates an example display system 100 having a support structure 102 that includes an arm 104, which houses a projection system configured to project images toward the eye of a user, such that the user perceives the projected images as being displayed in a field of view (FOV) area 106 of a display at one or both of lens elements 108, 110. In the depicted embodiment, the display system 100 is a WHMD that includes a support structure 102 configured to be worn on the head of a user and has a general shape and appearance of an eyeglasses (e.g., sunglasses) frame. The support structure 102, including the lens elements 108, 110, contains or otherwise includes various components to facilitate the projection of such images toward the eye of the user, such as a laser projector, an optical scanner, a waveguide, and an eyebox expander. In some embodiments, the support structure 102 further includes various sensors, such as one or more front-facing cameras, rear-facing cameras, other light sensors, motion sensors, accelerometers, and the like. In some embodiments, the support structure 102 further includes one or more radio frequency (RF) interfaces or other wireless interfaces, such as a Bluetooth^{™} interface, a WiFi interface, and the like. Further, in some embodiments, the support structure 102 further includes one or more batteries or other portable power sources for supplying power to the electrical components of the display system 100. In some embodiments, some or all of these components of the display system 100 are fully or partially contained within an inner volume of support structure 102, such as within the arm 104 in region 112 of the support structure 102. It should be noted that while an example form factor is depicted, it will be appreciated that in other embodiments the display system 100 may have a different shape and appearance from the eyeglasses frame depicted in FIG. 1.

One or both of the lens elements 108, 110 are used by the display system 100 to provide an augmented reality (AR) display in which rendered graphical content can be superimposed over or otherwise provided in conjunction with a real-world view as perceived by the user through the lens elements 108, 110. For example, projected light beams used to form a perceptible image or series of images may be projected by a laser projector of the display system 100 onto the eye of the user via a series of optical elements, such as a waveguide formed at least partially in the corresponding lens element, one or more scan mirrors, one or more optical relays, and an eyebox expander. One or both of the lens elements 108, 110 thus include at least a portion of a waveguide that routes display light received by an incoupler of the waveguide to an outcoupler of the waveguide, which outputs the display light toward an eye of a user of the display system 100. The display light is modulated and scanned onto the eye of the user such that the user perceives the display light as an image. In addition, each of the lens elements 108, 110 is sufficiently transparent to allow a user to see through the lens elements to provide a field of view of the user's real-world environment such that the image appears superimposed over at least a portion of the real-world environment. In some embodiments, the lens elements 108, 110 includes an eyebox expander for steering the projected light beams from the projector to a target location, e.g., a pupil of a user. Furthermore, in some embodiments, the eyebox expander is configured to counteract the distortion effects of the real world view attributed to the steering of the projected light beams, as described further herein.

In some embodiments, the projector is a digital light processing-based projector, a scanning laser projector, or any combination of a modulative light source such as a laser or one or more LEDs and a dynamic reflector mechanism such as one or more dynamic scanners or digital light processors. In some embodiments, the projector includes multiple laser diodes (e.g., a red laser diode, a green laser diode, and/or a blue laser diode) and at least one scan mirror (e.g., two one-dimensional scan mirrors, which may be microelectromechanical system (MEMS)-based or piezo-based). The projector is communicatively coupled to the controller and a non-transitory processor-readable storage medium or memory storing processor-executable instructions and other data that, when executed by the controller, cause the controller to control the operation of the projector. In some embodiments, the controller controls a scan area size and scan area location for the projector and is communicatively coupled to a processor (not shown) that generates content to be displayed at the display system 100. The projector scans light over a variable area, designated the FOV area 106, of the display system 100. The scan area size corresponds to the size of the FOV area 106, and the scan area location corresponds to a region of one of the lens elements 108, 110 at which the FOV area 106 is visible to the user. Generally, it is desirable for a display to have a wide FOV to accommodate the outcoupling of light across a wide range of angles. Herein, the range of different user eye positions that will be able to see the display is referred to as the eyebox of the display.

In some embodiments, the projector routes light via first and second scan mirrors, an optical relay disposed between the first and second scan mirrors, and a waveguide disposed at the output of the second scan mirror. In some embodiments, at least a portion of an outcoupler of the waveguide may overlap the FOV area 106.

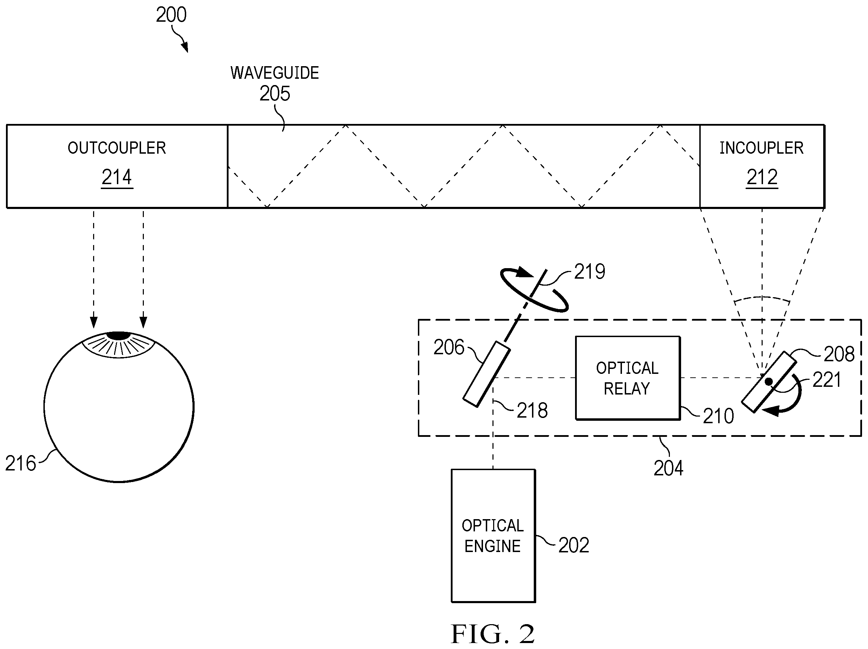

FIG. 2 illustrates a simplified block diagram of a projection system 200 that projects images directly onto the eye of a user via laser light. The projection system 200 includes an optical engine 202, an optical scanner 204, and a waveguide 205. As depicted, the optical scanner 204 includes a first scan mirror 206, a second scan mirror 208, and an optical relay 210. The waveguide 205 includes an incoupler 212 and an outcoupler 214, with the outcoupler 214 being optically aligned with an eye 216 of a user in the present example. In some embodiments, the projection system 200 is implemented in a WHMD or other display system, such as the display system 100 of FIG. 1.

In some embodiments, the optical engine 202 includes one or more laser light sources configured to generate and output laser light 218 (e.g., visible laser light such as red, blue, and green laser light and/or non-visible laser light such as infrared laser light). In some embodiments, the optical engine 202 is coupled to a driver or other controller (not shown), which controls the timing of emission of laser light from the laser light sources of the optical engine 202in accordance with instructions received by the controller or driver from a computer processor coupled thereto to modulate the laser light 218 to be perceived as images when output to the retina of an eye 216 of a user.

For example, during the operation of the projection system 200, multiple laser light beams having respectively different wavelengths are output by the laser light sources of the optical engine 202, then combined via a beam combiner (not shown), before being directed to the eye 216 of the user. The optical engine 202 modulates the respective intensities of the laser light beams so that the combined laser light reflects a series of pixels of an image, with the particular intensity of each laser light beam at any given point in time contributing to the amount of corresponding color content and brightness in the pixel being represented by the combined laser light at that time.

One or both of the scan mirrors 206 and 208 of the optical scanner 204 are MEMS mirrors in some embodiments. For example, the scan mirror 206 and the scan mirror 208 are MEMS mirrors that are driven by respective actuation voltages to oscillate during active operation of the laser projection system 200, causing the scan mirrors 206 and 208 to scan the laser light 218. Oscillation of the scan mirror 206 causes laser light 218 output by the optical engine 202 to be scanned through the optical relay 210 and across a surface of the second scan mirror 208. The second scan mirror 208 scans the laser light 218 received from the scan mirror 206 toward an incoupler 212 of the waveguide 205. In some embodiments, the scan mirror 206 oscillates along a first scanning axis 219, such that the laser light 218 is scanned in only one dimension (i.e., in a line) across the surface of the second scan mirror 208. In some embodiments, the scan mirror 208 oscillates or otherwise rotates along a second scanning axis 221. In some embodiments, the first scanning axis 219 is perpendicular to the second scanning axis 221.

In some embodiments, the incoupler 212 has a substantially rectangular profile and is configured to receive the laser light 218 and direct the laser light 218 into the waveguide 205. The incoupler 212 is defined by a smaller dimension (i.e., width) and a larger orthogonal dimension (i.e., length). In an embodiment, the optical relay 210 is a line-scan optical relay that receives the laser light 218 scanned in a first dimension by the first scan mirror 206 (e.g., the first dimension corresponding to the small dimension of the incoupler 212), routes the laser light 218 to the second scan mirror 208, and introduces a convergence to the laser light 218 in the first dimension to an exit pupil beyond the second scan mirror 208. Herein, an "exit pupil" in an optical system refers to the location along the optical path where beams of light intersect. For example, the possible optical paths of the laser light 218, following reflection by the first scan mirror 206, are initially spread along the first scanning axis, but later these paths intersect at an exit pupil beyond the second scan mirror 208 due to convergence introduced by the optical relay 210. For example, the width (i.e., smallest dimension) of a given exit pupil approximately corresponds to the diameter of the laser light corresponding to that exit pupil. Accordingly, the exit pupil can be considered a "virtual aperture." According to various embodiments, the optical relay 210 includes one or more collimation lenses that shape and focus the laser light 218 on the second scan mirror 208 or includes a molded reflective relay that includes two or more spherical, aspheric, parabolic, and/or freeform lenses that shape and direct the laser light 218 onto the second scan mirror 208. The second scan mirror 208 receives the laser light 218 and scans the laser light 218 in a second dimension, the second dimension corresponding to the long dimension of the incoupler 212 of the waveguide 205. In some embodiments, the second scan mirror 208 causes the exit pupil of the laser light 218 to be swept along a line along the second dimension. In some embodiments, the incoupler 212 is positioned at or near the swept line downstream from the second scan mirror 208 such that the second scan mirror 208 scans the laser light 218 as a line or row over the incoupler 212.

In some embodiments, the optical engine 202 includes an edge-emitting laser (EEL) that emits a laser light 218 having a substantially elliptical, non-circular cross-section, and the optical relay 210 magnifies or minimizes the laser light 218 along its semi-major or semi-minor axis to circularize the laser light 218 prior to convergence of the laser light 218 on the second scan mirror 208. In some such embodiments, a surface of a mirror plate of the scan mirror 206 is elliptical and non-circular (e.g., similar in shape and size to the cross-sectional area of the laser light 218). In other such embodiments, the surface of the mirror plate of the scan mirror 206 is circular.

The waveguide 205 of the laser projection system 200 includes the incoupler 212 and the outcoupler 214. The term "waveguide," as used herein, will be understood to mean a combiner using one or more of total internal reflection (TIR), specialized filters, and/or reflective surfaces, to transfer light from an incoupler (such as the incoupler 212) to an outcoupler (such as the outcoupler 214). In some display applications, the light is a collimated image, and the waveguide transfers and replicates the collimated image to the eye. In general, the terms "incoupler" and "outcoupler" will be understood to refer to any type of optical grating structure, including, but not limited to, diffraction gratings, holograms, holographic optical elements (e.g., optical elements using one or more holograms), volume diffraction gratings, volume holograms, surface relief diffraction gratings, and/or surface relief holograms. In some embodiments, a given incoupler or outcoupler is configured as a transmissive grating (e.g., a transmissive diffraction grating or a transmissive holographic grating) that causes the incoupler or outcoupler to transmit light and to apply designed optical function(s) to the light during the transmission. In some embodiments, a given incoupler or outcoupler is a reflective grating (e.g., a reflective diffraction grating or a reflective holographic grating) that causes the incoupler or outcoupler to reflect light and to apply designed optical function(s) to the light during the reflection. In the present example, the laser light 218 received at the incoupler 212 is relayed to the outcoupler 214 via the waveguide 205 using TIR. The laser light 218 is then output to the eye 216 of a user via the outcoupler 214. As described above, in some embodiments the waveguide 205 is implemented as part of an eyeglass lens, such as the lens 108 or lens 110 (FIG. 1) of the display system having an eyeglass form factor and employing the laser projection system 200.

Although not shown in the example of FIG. 2, in some embodiments additional optical components are included in any of the optical paths between the optical engine 202 and the scan mirror 206, between the scan mirror 206 and the optical relay 210, between the optical relay 210and the scan mirror 208, between the scan mirror 208 and the incoupler 212, between the incoupler 212 and the outcoupler 214, and/or between the outcoupler 214 and the eye 216 (e.g., in order to shape the laser light for viewing by the eye 216 of the user). In some embodiments, a prism is used to steer light from the scan mirror 208 into the incoupler 212 so that light is coupled into incoupler 212 at the appropriate angle to encourage propagation of the light in waveguide 205 by TIR. Also, in some embodiments, an exit pupil expander (EPE), such as a fold grating, is arranged in an intermediate stage between incoupler 212 and outcoupler 214 to receive light that is coupled into waveguide 205 by the incoupler 212, expand the light, and redirect the light towards the outcoupler 214, where the outcoupler 214 then couples the laser light out of waveguide 205 (e.g., toward the eye 216 of the user).

In some embodiments, the projection system 200 also includes an eyebox expander (not shown) that at least partially overlaps the waveguide 205 or is integrated within the waveguide 205. For example, the eyebox expander includes a first liquid crystal layer, an electrode arrangement, and a compensation layer that at least partially overlaps each of the incoupler 212, outcoupler 214, and the EPE of the waveguide 205. The eyebox expander steers the light beams generated by the projection system 202 to a target location, such as to the eye 216 of the user. Furthermore, the eyebox expander steers light beams from the real-world passing through the waveguide 205 to the target location, such as to the eye 216 of the user, as well.

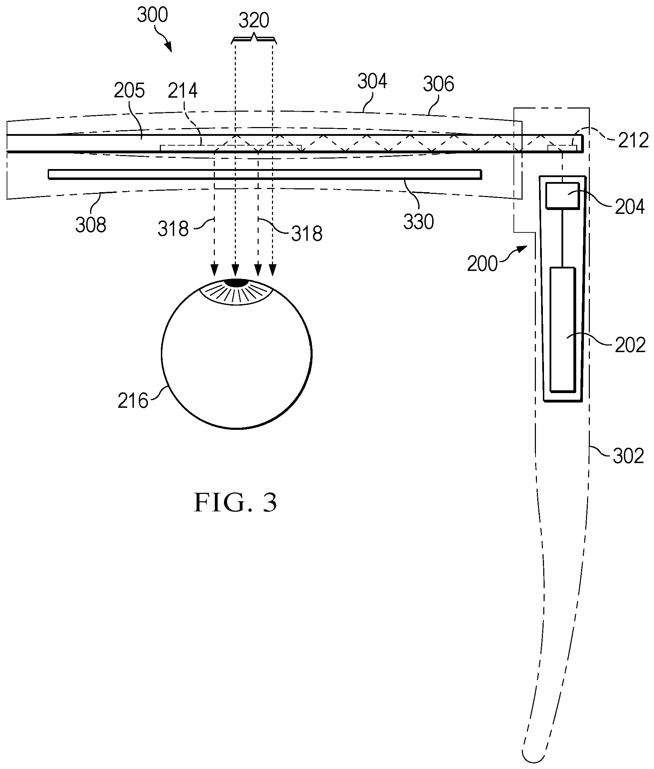

FIG. 3 illustrates a portion of a WHMD 300 that includes a projection system, such as the projection system 200 described above in FIG. 2. In some embodiments, the WHMD 300 represents the display system 100 of FIG. 1. The optical engine 202, the optical scanner 204, the incoupler 212, and a portion of the waveguide 205 are included in an arm 302 of the WHMD 300, in the present example.

The WHMD 300 includes an optical combiner lens 304, which includes a first substrate 306, a second substrate 308, and the waveguide 205, with the waveguide 205 disposed between the first substrate 306 and the second substrate 308. Projected light 318 exiting through the outcoupler 214 travels through the second substrate 308 (which corresponds to, for example, the lens element 110 of the display system 100). In use, the projected light 318 exiting second substrate 308 enters the pupil of an eye 216 of a user wearing the WHMD 300, causing the user to perceive a displayed image carried by the laser light output by the optical engine 202. The optical combiner lens 304 is substantially transparent, such that light 320 from real-world scenes (also referred to as incident or ambient light) corresponding to the environment around the WHMD 300 passes through the first substrate 306, the second substrate 308, and the waveguide 205 to the eye 216 of the user. In this way, images or other graphical content output by the projection system 200 are combined (e.g., overlayed) with real-world images of the user's environment when projected onto the eye 216 of the user to provide an AR experience to the user.

In some embodiments, an eyebox expander 330 (described in further detail below) at least partially overlaps or is integrated in the waveguide 205. For example, generally, the eyebox expander 330 is located between the first substrate 306 and the second substrate 308 of the optical combiner lens 304. The eyebox expander 330 includes a first liquid crystal layer that implements a "prism-like" phase based on a first applied voltage to steer light beams to an eyebox corresponding to the WHMD 300 on demand, e.g., based on a detected location of a pupil of an eye 216 of a user. The first applied voltage, in other words, modifies an orientation of a first plurality of liquid crystals in the first liquid crystal layer, where the modification of the orientation steers the light beams to the target location. In some embodiments, the eyebox expander 330 further includes a compensation layer which counteracts distortion effects to the light 320 from real-world scenes caused by the modification of the orientation of the first plurality of crystals in the first crystal layer. For example, the compensation layer is a second liquid crystal layer to which a second voltage is applied to modify the orientation of a second plurality of liquid crystals located in the second liquid crystal layer. The eyebox expander 330, accordingly, further includes an electrode arrangement to apply the first and the second voltages to the first liquid crystal layer and the compensation layer, respectively.

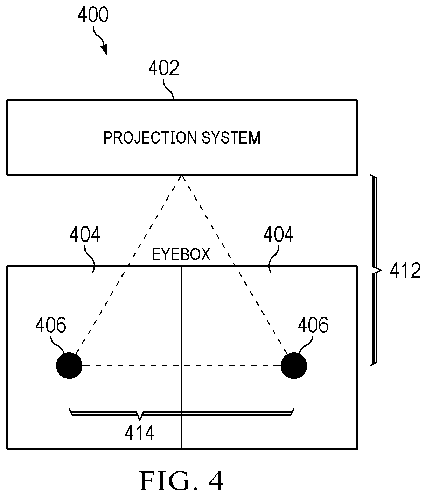

FIG. 4 illustrates an example of a diagram 400 demonstrating eyebox considerations for liquid crystal beam steering. In some embodiments, the projection system 402 corresponds with the projection system 200 of the WHMD shown in the previous figures. Two eyeboxes 404 are shown, where each eyebox corresponds to a volume in which the projection system 402 is able to display an image to the user. In addition, two example pupil locations 406 are shown.

As shown in diagram 400, the projection system 402 projects light, e.g., from an outcoupler, in the form of an emission cone to the eyeboxes 404. Generally speaking, an eyebox is the volume in front of the display where the display content can be observed with a relatively small amount of distortion or other visual artifacts. For example, outside the eyebox, the display content may be distorted, or the colors may be displayed incorrectly. Although shown as a two-dimensional box for purposes of clarity, the eyebox can also be described as a conical-like three-dimensional volume that becomes thinner as the distance to the projection system 402 increases. In some embodiments, the etendue of the emission cone is matched to a 10 mm pupil and 10x10 degree field, for example. Furthermore, in some embodiments, there are a continuous number of steering states of the projection system 402 with steering angles in the range of ± 15 degrees, for example. Also shown in diagram 400 is the eye relief 412 (the distance from the projection system 402 to the pupil location 406) and the IPD distance 414. Accordingly, the eyebox 404 for a WHMD display can be defined as being a function of numerous variables, including eye relief 412, the IPD distance 414, other user head geometry variables (e.g., ear apex, nose width), and the area of the outcoupler in the projection system 402.

The techniques described herein allow for a projection system of a WHMD, such as one shown in the preceding Figures, to steer light beams to expand the size of the eyebox associated with the WHMD, therefore allowing the WHMD to effectively display images to a wider range of users. Accordingly, a smaller outcoupler size can be used to outcouple light to display images to a wider eyebox range, thereby allowing for increased efficiency and color uniformity for a wide user base while reducing fabrication costs.

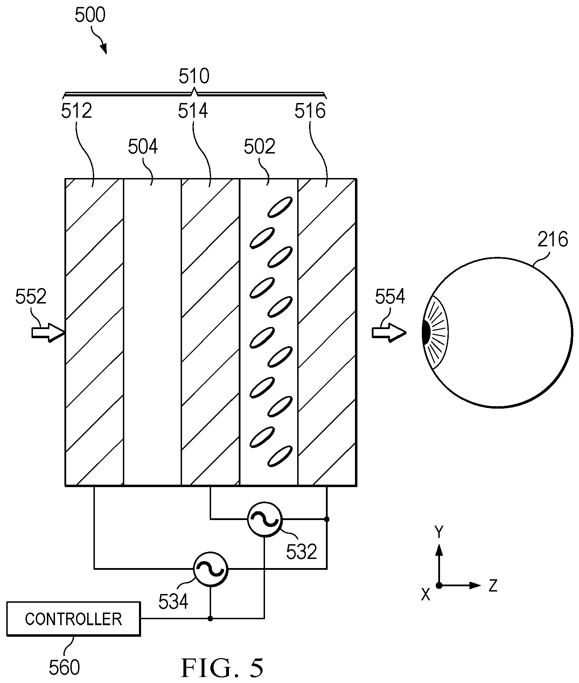

FIG. 5 illustrates cross-sectional view of schematic diagram of an eyebox expander 500 according to some embodiments. In some embodiments, the eyebox expander 500 corresponds to eyebox expander 330 of FIG. 3. As shown in FIG. 5, the positive z-direction points to the direction of the eyebox corresponding to an eye 216 of a user.

In some embodiments, the eyebox expander 500 includes a first liquid crystal layer 502 and a compensation layer 504. The first liquid crystal layer 502 includes a first plurality of liquid crystals. For example, the first plurality of liquid crystals is a first set of nematic liquid crystals. The compensation layer 504, in some embodiments, is a second liquid crystal layer that includes a second plurality of liquid crystals, e.g., a second set of nematic liquid crystals. In some embodiments, the liquid crystals in the first plurality of liquid crystals are of the same type as in the second plurality of liquid crystals. In other embodiments, the types of liquid crystals in are different. In some embodiments, each of the first liquid crystal layer 502 and the compensation layer 504 are at least partially optically transparent to allow light beams to pass through.

In some embodiments, the eyebox expander 500 includes an electrode arrangement 510 including a first electrode 512, a patterned electrode 514, and a second electrode 516. Each of the electrodes in the electrode arrangement 510 are made of at least partially optically transparent materials to allow light to pass through. In addition, each of the electrodes in the electrode arrangement 510 are made of at least partially electrically conductive materials to apply a first voltage to the first liquid crystal layer 504 and/or apply a second voltage to the compensation layer 504. For example, in some embodiments, each of the first electrode 512, the patterned electrode 514, and the second electrode 516 in the electrode arrangement are composed of at least partially optically transparent metal oxides such as a transparent conducting oxide film.

As shown in FIG.5, the first liquid crystal layer 502, in some embodiments, is arranged between the patterned electrode 514 and the second electrode 516. The compensation layer 504, in some embodiments, is arranged between the first electrode 512 and the patterned electrode 514.

In some embodiments, the electrode arrangement 510 is coupled to a controller 560. The controller 560 is configured to control the voltages across the different electrodes in the electrode arrangement 510. For example, a first voltage source 532 is located between the patterned electrode 514 and the second electrode 516. In some embodiments, a second voltage source 534 is located between the first electrode 512 and the second electrode 516. Controller 560 is configured to control one or both of the first voltage source 532 and the second voltage source 534 to modify the voltages applied to the first liquid crystal 502 and/or compensation layer 504, respectively. In this manner, the controller 560 controls the voltages applied to each of the first liquid crystal layer 502 and the compensation layer 504 to alter their respective structures to affect the manner light passes through the respective layers. For example, a first voltage is applied via first voltage source 532 to modify the orientation of the first plurality of crystals in the first liquid crystal layer 502 so as to direct light beams, e.g., output light 554, to a target location such as a detected pupil of a user eye 216. Based on the first voltage, the controller 560, in some embodiments, is further configured to apply a second voltage via second voltage source 534 to compensation layer 504 to alter the structure of the compensation layer 504 to redirect light passing through it. For example, in cases where the compensation layer 504 is a second liquid crystal layer, this includes modifying the orientation of the crystals in the second liquid crystal layer.

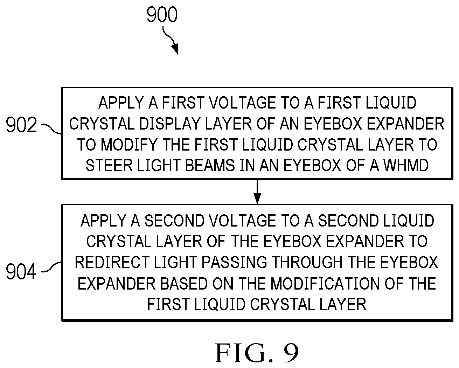

In some embodiments, the second voltage is dependent on the first voltage applied by the controller 560. For example, the first voltage is based on a condition associated with an eyebox corresponding to the eyebox expander 500. This condition, for example, is the detected location of a pupil of a user eye 216. The controller 506, in some embodiments, includes processing circuitry that includes or is communicatively coupled to a memory storing a lookup table (LUT) with entries for different locations and a first voltage corresponding to each of the different locations. For example, the different locations include (x, y) coordinates that correspond to the location of a detected pupil of a user eye 216. Accordingly, the LUT stores entries for different possibilities of the locations of the pupil within an eyebox associated with the eyebox expander 500. Furthermore, each location entry in the LUT includes a corresponding first voltage for modifying the orientation of the first plurality of liquid crystals in the first liquid crystal layer 502 to direct light beams to the respective location. In some embodiments, the LUT also includes information for the second voltage that is dependent on the first voltage. For example, if the first voltage is zero, then the second voltage may also be zero. If the first voltage is a first voltage value, then the second voltage may be a second voltage value different from the first voltage value. In some embodiments, the second voltage is a predetermined amount based on the first voltages to alter the structure of the compensation layer 504 so as to counteract the effects of the first liquid crystal layer 502 on light passing through the eyebox expander 500 (described in further detail in FIG. 9). An exemplary LUT is shown below in Table I. In some embodiments, the number of entries is scalable so as to provide the eyebox expander 500 with a full range of coverage covering a wide range of possible target locations in the eyebox corresponding to eyebox expander 500.

**Table I**

| Target Location Coordinates | First Voltage | Second Voltage |
|---|---|---|
| (x₁, y₁) | 0 | 0 |
| (x₂, y₂) | V₁ | V₂ |
| (x₃, y₃) | V₃ | V₄ |

In some embodiments, the eyebox expander 500 implements the following techniques for steering light beams to a target location such as a pupil of a user eye 216. First, the target location is determined. For example, the target location is determined utilizing eye-tracking hardware and/or software in a WHMD, e.g., WHMD 300. The target location is then fed to the controller 560, which looks up the target location coordinates from an LUT such as one shown above in Table I. Based on the set of target location coordinates in the LUT that best correlates with the detected target location, the first voltage is retrieved from the corresponding LUT entry. This first voltage is applied to the first liquid crystal layer 502 via the first voltage source 532 to modify the orientation of the first plurality of liquid crystals in the first liquid crystal layer 502. Next, a corresponding second voltage is retrieved from the LUT. The second voltage is applied to the compensation layer 504 via the second voltage source 534 to alter the structure of the compensation layer 504, e.g., by modifying the orientation of liquid crystals in the compensation layer 504.

Accordingly, once incident (or ambient) light 552 enters the eyebox expander 500, it passes through the first electrode 512, is redirected by the compensation layer 504 based on the second voltage applied to it by second voltage source 534, passes through the patterned electrode 514, and is then redirected in the direction of the target location by the first liquid crystal layer 502 based on the first voltage applied by first voltage source 532 before finally exiting the eyebox expander 500 through the second electrode 516.

In some embodiments, the first voltage applied by the electrode arrangement 510 to the first liquid crystal layer 502 includes a plurality of voltages applied by the patterned electrode 514. By applying a plurality of voltages to the first liquid crystal layer 502, the first plurality of liquid crystals changes orientations, thereby modulating the light passing through the first liquid crystal layer 502 to convert it to the wavefront of the output light 554. In other words, the output light 554 is modulated and exhibits electrically tunable focusing properties as well as beam steering properties.

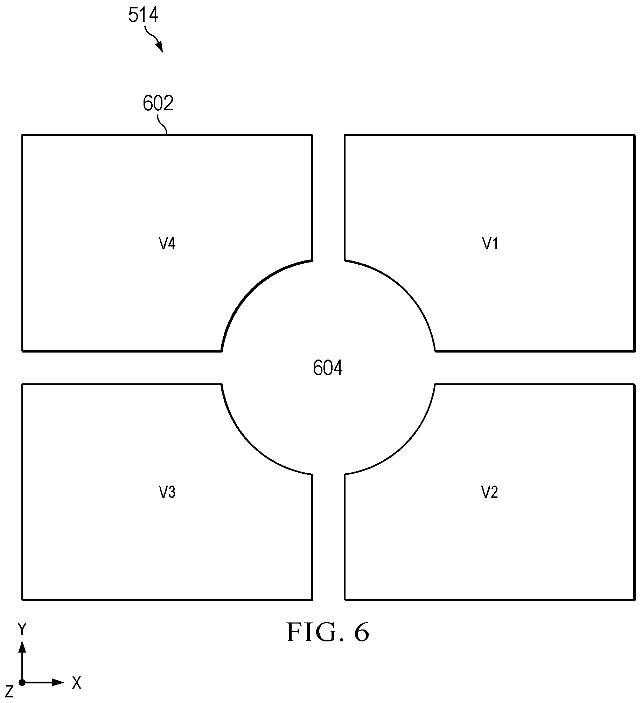

FIG. 6 illustrates a word-side view of the patterned electrode 514. As shown, the patterned electrode 514 includes a plurality of geometric segments 602 (one shown in the interest of clarity) that form an aperture 604 in the middle, wherein a voltage can be individually applied to each of the plurality of different geometric segments 602. The size of the aperture 604, for example, is in the range of about 5 mm to 20 mm, e.g., about 10 mm, in diameter. In this example, the patterned electrode 514 includes four geometric segments 602 that form a circular aperture 604. However, it is appreciated that the four geometric segments 602 shown in FIG. 4 are an example configuration and other quantities (e.g., more than four) and other shapes for the geometric segments 602 are similarly considered. By applying voltages (e.g., V₁-V₄) via the plurality of geometric segments 602 to the first liquid crystal layer, the patterned electrode 514 modifies the orientation of the plurality of first liquid crystals in the first liquid crystal layer to effectively steer the output light beams. Accordingly, the eyebox expander, including the patterned electrode 514, is able to expand the eyebox by steering the beams to a target location, such as to a location corresponding to a detected pupil of a user.

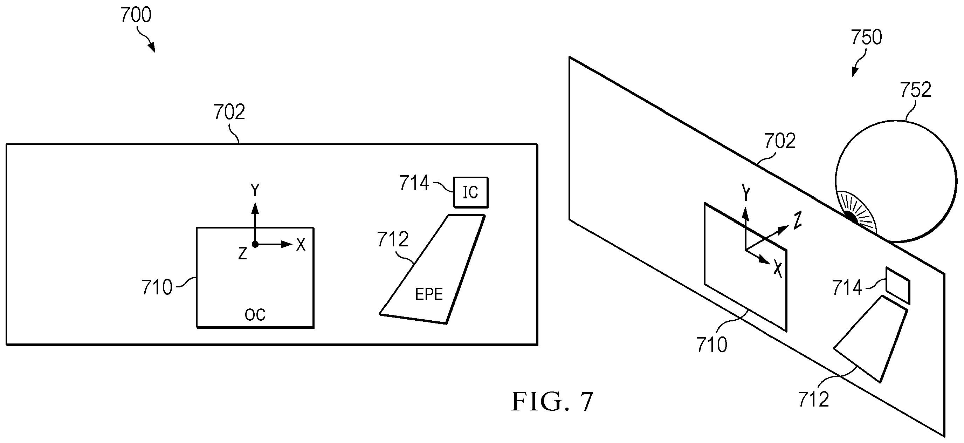

FIG. 7 shows a first view 700 and a second view 750 of a waveguide 702 with an integrated eyebox expander in accordance with some embodiments. The first view 700 corresponds to a world-side view, and the second view 750 corresponds to a perspective view with a partial view of a user eye 752.

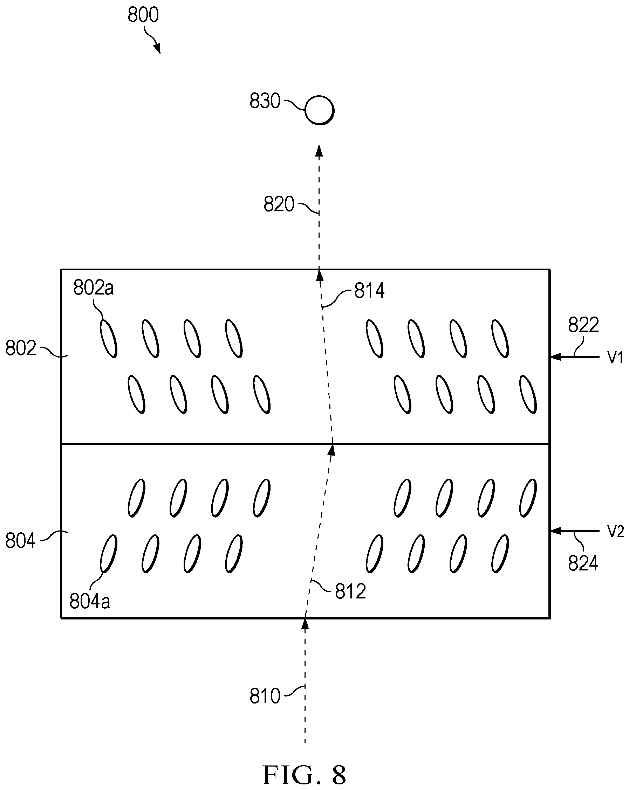

In some embodiments, the eyebox expander is completely integrated into a waveguide 702 with a set of three gratings: an incoupler (IC) 714, an exit pupil expander (EPE) 712, and an outcoupler (OC) 710. The orientation and the period of these three gratings are designed so that the grating K vectors sum to zero. Applying the eyebox expander across the whole waveguide as shown in FIG. 8 provides uniformity in the incident (or ambient) light from the real-world passing through the lens of the WHMD, thereby providing a more accurate real-world view to improve the overall user experience.

FIG. 8 illustrates a top-view schematic diagram of an eyebox expander 800 demonstrating the compensation effect on the see-through light from the real world view in accordance with some embodiments. In some embodiments, the eyebox expander 800 corresponds to the eyebox expander 330 in FIG. 3, the eyebox expander 500 in FIG. 5, and/or the integrated eyebox expander discussed with respect to FIG. 7. For purposes of clarity and this explanation, the first crystal liquid layer 802 and the compensation layer 804 are featured in the ensuing description, but it is appreciated that, in some embodiments, the eyebox expander includes other components, such as the electrode arrangement described in FIG. 5.

In some embodiments, the first liquid crystal layer 802 includes a first plurality of crystals 802a (one indicated in the interest of clarity) and the compensation layer 804 includes a second plurality of crystals 804a (one indicated in the interest of clarity). The orientation of the first plurality of crystals 802a in the first liquid crystal layer 802 is modified by the application of a first voltage (V1) 822 via an electrode arrangement (not shown). Based on the application of the first voltage (V1) 822 to the first liquid crystal layer 802, the electrode arrangement applies a second voltage (V2) 824 to the compensation layer 804 to modify the orientation of the second plurality of crystals 804a. In this manner, the eyebox expander is able to steer light beams to a target location 830, such as to a detected pupil of a user, while ameliorating the distortion effect on light passing through the eyebox expander.

To illustrate, input beam 810 represents a ray of light from the outside real-world view received by the eyebox expander 800. The input beam 810 first passes through the compensation layer 804 which includes the second plurality of liquid crystals 804a. On passing though the compensation layer 804, the input ray 810 is steered in a direction corresponding to ray 812. Then, this ray hits the first liquid crystal layer 802 which includes the first plurality of liquid crystals 802a. On passing through the first liquid crystal layer 802, the ray 812 is redirected in a direction corresponding to ray 814. Upon exiting the first liquid crystal layer 802, the ray is redirected in a direction corresponding to output ray 820. In this manner, the compensation layer 804 ensures that the angle of the output ray 820 and the angle of input ray 810 are the same or are within a margin of difference as compared to if the eyebox expander 800 did not include the compensation layer 804. This margin of difference, for example, is a tolerable margin of difference such that the effect of the eyebox expander 800 on the see-through light originating from the real-world view is not obvious to the user. For example, this tolerable margin of difference between the input ray of light 810 and the output ray of light 820 is approximately 0.33 diopters.

Accordingly, the compensation layer 804, based on the modification of the first plurality of crystals 802a in the first liquid crystal layer 802, counteracts the subsequent effect that the first liquid crystal layer 802 has on the see-through light by modifying the orientation of the second plurality of liquid crystals 804a. For example, the eyebox expander is configured to, based on the first voltage (V1) 822 applied to the first liquid crystal layer 802, apply a second voltage (V2) 824 to the compensation layer 804. Accordingly, since the input beam 810 and the output beam 820 essentially have the same angle (i.e., point in the same direction), a more accurate portrayal of the real-world is delivered to the user, thereby improving the overall user experience.

FIG. 9 illustrates a flowchart 900 detailing a method for an eyebox expander to steer light beams in an eyebox of a WHMD housing the eyebox expander. In 902, the method includes applying a first voltage to a first liquid crystal layer of an eyebox expander to modify an orientation associated with the first liquid crystal layer to steer light beams in an eyebox of a WHMD. For example, the modification associated with the first liquid crystal layer includes modifying the orientation of a first plurality of crystals in the first liquid crystal layer. In 1004, the method includes applying a second voltage to a second liquid crystal layer of the eyebox expander to redirect light passing through the eyebox expander based on the modification of the orientation associated with the first liquid crystal layer.

For example, an eyebox expander in a WHMD performs step 902 in response to determining that the pupil of the eye of the user has moved from a first location to a second location. The eyebox expander applies the voltage, via an electrode arrangement, to the first liquid crystal layer to modify the orientation of the liquid crystals therein to steer the light beam from the first location to the second location. Thus, the WHMD displays an image that is adjusted based on a movement and/or a rotation of the eye of the user. Additionally, the eyebox expander performs step 904 to redirect light passing through the eyebox expander (e.g., light originating from the real world view outside the WHMD) based on the modification of the orientation of the first plurality of crystals int step 902.

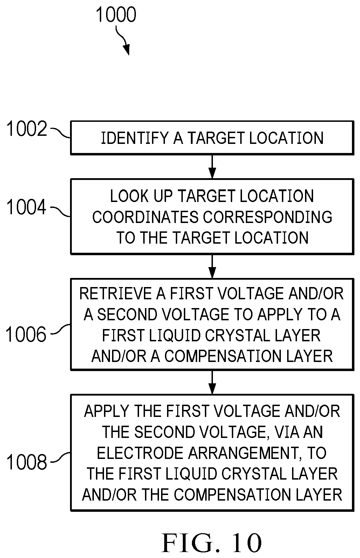

FIG. 10 shows a flowchart 1000 detailing a method for an eyebox expander to determine a first voltage and/or a second voltage to apply to a first liquid crystal layer and/or a compensation layer, respectively. In 1002, the method includes identifying a target location. The target location corresponds to, for example, a detected pupil location to which the eyebox expander will dynamically steer the light beams toward. In some embodiments, the target location is detected utilizing eye-tracking hardware and/or software in a WHMD. In some embodiments, the target location is detected by a separate component from the eyebox expander (e.g., in cases where the eye-tracking feature is part of a separate processing component of the WHMD) and is then communicated to the eyebox expander. In 1004, the method includes looking up target location coordinates corresponding to the identified target location. For example, a LUT table storing a plurality of entries of target location coordinates is utilized, and the entry with the target location coordinates closest to the identified target location is used. In some embodiments, two target location coordinates are used to linearly interpolate data for the identified target location. In 1006, the method includes retrieving the first voltage and/or the second voltage. For example, the first voltage and/or the second voltage are retrieved from the LUT in the entry corresponding to the respective target location coordinates from 1004. The first voltage is the voltage to be applied to the first liquid crystal layer, and the second voltage is the voltage to be applied to the compensation layer based on the first voltage applied to the first liquid crystal layer. In 1008, the method includes applying one or both of the first voltage or the second voltage, via an electrode arrangement such as electrode arrangement 510 in FIG. 5, to the first liquid crystal layer and/or the compensation layer. In some embodiments, in cases where the first voltage and/or the second voltage is zero, this includes removing any voltage applied to the first liquid crystal layer and/or the compensation layer.

In some embodiments, certain aspects of the techniques described above may be implemented by one or more processors of a processing system executing software. The software comprises one or more sets of executable instructions stored or otherwise tangibly embodied on a non-transitory computer readable storage medium. The software can include the instructions and certain data that, when executed by the one or more processors, manipulate the one or more processors to perform one or more aspects of the techniques described above. The non-transitory computer readable storage medium can include, for example, a magnetic or optical disk storage device, solid state storage devices such as Flash memory, a cache, random access memory (RAM) or other non-volatile memory device or devices, and the like. The executable instructions stored on the non-transitory computer readable storage medium may be in source code, assembly language code, object code, or other instruction format that is interpreted or otherwise executable by one or more processors.

A computer readable storage medium may include any storage medium, or combination of storage media, accessible by a computer system during use to provide instructions and/or data to the computer system. Such storage media can include, but is not limited to, optical media (e.g., compact disc (CD), digital versatile disc (DVD), Blu-Ray disc), magnetic media (e.g., floppy disc, magnetic tape, or magnetic hard drive), volatile memory (e.g., random access memory (RAM) or cache), non-volatile memory (e.g., read-only memory (ROM) or Flash memory), or microelectromechanical systems (MEMS)-based storage media. The computer readable storage medium may be embedded in the computing system (e.g., system RAM or ROM), fixedly attached to the computing system (e.g., a magnetic hard drive), removably attached to the computing system (e.g., an optical disc or Universal Serial Bus (USB)-based Flash memory) or coupled to the computer system via a wired or wireless network (e.g., network accessible storage (NAS)).

Note that not all of the activities or elements described above in the general description are required, that a portion of a specific activity or device may not be required, and that one or more further activities may be performed, or elements included, in addition to those described. Still further, the order in which activities are listed are not necessarily the order in which they are performed. Also, the concepts have been described with reference to specific embodiments. However, one of ordinary skill in the art appreciates that various modifications and changes can be made without departing from the scope of the present disclosure as set forth in the claims below. Accordingly, the specification and figures are to be regarded in an illustrative rather than a restrictive sense, and all such modifications are intended to be included within the scope of the present disclosure.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims. Moreover, the particular embodiments disclosed above are illustrative only, as the disclosed subject matter may be modified and practiced in different but equivalent manners apparent to those skilled in the art having the benefit of the teachings herein. No limitations are intended to the details of construction or design herein shown, other than as described in the claims below. It is therefore evident that the particular embodiments disclosed above may be altered or modified and all such variations are considered within the scope of the disclosed subject matter. Accordingly, the protection sought herein is as set forth in the claims below.

## Claims

1. An eyebox expander (330, 500, 800) for a wearable head mounted display, WHMD, (300) comprising:
a first liquid crystal layer (502, 802);
an electrode arrangement (510) to apply a first voltage to the first liquid crystal layer (502, 802) to modify an orientation associated with the first liquid crystal layer (502, 802), wherein the electrode arrangement (510) is coupled to a controller, the controller being configured to control the first voltage based on at least one of a variation in interpupillary distance of a user of the WHMD (300) or a variation in eye relief between the WHMD (300) and the user; and
a compensation layer (504, 804) to redirect light passing through the eyebox expander (330, 500, 800) based on the modification of the orientation associated with the first liquid crystal layer (502, 802).

2. The eyebox expander (330, 500, 800) of claim 1, wherein the electrode arrangement (510) comprises a patterned electrode (514).

3. The eyebox expander (330, 500, 800) of claim 2, wherein the patterned electrode (514) is located between a first electrode (512) and a second electrode (516), wherein, optionally, the first liquid crystal layer (502, 802) is located between the patterned electrode (514) and the second electrode (516).

4. The eyebox expander (330, 500, 800) of claim 3, wherein the second electrode (516) receives light from the first liquid crystal layer (502, 802) and transmits light toward an eyebox (404) associated with the WHMD (300) based on the modification of the orientation associated with the first liquid crystal layer (502, 802).

5. The eyebox expander (330, 500, 800) of claim 2-4, wherein the patterned electrode (514) comprises a plurality of electrode sections arranged to form an aperture.

6. The eyebox expander (330, 500, 800) of claims 5, wherein the electrode arrangement (510) applies the first voltage as a plurality of voltages across the plurality of electrode sections of the patterned electrode (514).

7. The eyebox expander (330, 500, 800) of any one of claims 3-5, wherein the electrode arrangement (510) is configured to apply the first voltage between the second electrode and the patterned electrode (514).

8. The eyebox expander (330, 500, 800) of any one of claims 3-7, wherein the compensation layer (504, 804) is located between the first electrode (512) and the patterned electrode (514).

9. The eyebox expander (330, 500, 800) of any one of claims 1-8, wherein the compensation layer (504, 804) is a second liquid crystal layer, wherein, optionally, the electrode arrangement (510) is configured to apply a second voltage to the second liquid crystal layer based on the first voltage applied to the first crystal layer (502, 802).

10. The eyebox expander of any one of claims 1-9, wherein the modification of the orientation associated with the first liquid crystal layer (502, 802) is further based on an eye movement of the user.

11. The eyebox expander (330, 500, 800) of any one of claims 1-10, wherein light input to the eyebox expander (330, 500, 800) from outside the WHMD (300) and light output from the eyebox expander (330, 500, 800) in a direction of a user have a same angle within a margin of difference.

12. A lens for a wearable head mounted display, WHMD, (300) comprising:
a first substrate (306),
a second substrate (308), and
the eyebox expander (330, 500, 800) according to claim 1.

13. The lens of claim 12, further comprising a waveguide (205) comprising an incoupler (212), an exit pupil expander, and an outcoupler (214), the waveguide located between the first substrate (306) and the second substrate (308), wherein, optionally, the eyebox expander (330, 500, 800) is integrated into or partially arranged over each of the incoupler, the exit pupil expander, and the outcoupler.

14. A method to steer light beams in an eyebox (404) of a wearable head mounted display, WHMD, (300) the method comprising:
applying a first voltage to a first liquid crystal layer (502, 802) to modify an orientation associated with the first liquid crystal layer (502, 802) to steer light beams in the eyebox (404), wherein the modification of the orientation associated with the first liquid crystal layer (502, 802) is based on at least one of a variation in an interpupillary distance of a user of the WHMD (300) or a variation in eye relief between the WHMD (300) and the user; and
applying a second voltage to a second liquid crystal layer (504, 804) to redirect light passing through a lens of the WHMD (300) based on the modification of the orientation associated with the first liquid crystal layer (502, 802).

15. The method of claim 14, further comprising applying the first voltage in a series of segmented voltages to the first liquid crystal layer (502, 802) via an electrode arrangement (510) comprising a first electrode (512), a patterned electrode (514), and a second electrode (516), wherein, optionally, the first liquid crystal layer (502, 802) is located between the patterned electrode (514) and the second electrode (516), and the second liquid crystal layer (504, 804) is located in between the first electrode (512) and the patterned electrode (514), wherein the first liquid crystal layer (502, 802) is located closer in a direction of a user of the WHMD (300) than the second liquid crystal layer (504, 804).

## Patentansprüche

1. Eyebox-Expander (330, 500, 800) für eine tragbare, am Kopf montierte Anzeige, WHMD (wearable head mounted display), (300), umfassend:
eine erste Flüssigkristallschicht (502, 802);
eine Elektrodenanordnung (510) zum Anlegen einer ersten Spannung an die erste Flüssigkristallschicht (502, 802), um eine Ausrichtung zu verändern, die der ersten Flüssigkristallschicht (502, 802) zugeordnet ist, wobei die Elektrodenanordnung (510) mit einer Steuerung gekoppelt ist, wobei die Steuerung dazu ausgelegt ist, die erste Spannung basierend auf mindestens einer von einer Variation des Pupillenabstands eines Benutzers der WHMD (300) oder einer Variation des Augenabstands zwischen der WHMD (300) und dem Benutzer zu steuern; und
eine Kompensationsschicht (504, 804) zum Umleiten des Lichtes, das durch den Eyebox-Expander (330, 500, 800) hindurchtritt, basierend auf der Änderung der Ausrichtung, die der ersten Flüssigkristallschicht (502, 802) zugeordnet ist.

2. Eyebox-Expander (330, 500, 800) nach Anspruch 1, wobei die Elektrodenanordnung (510) eine strukturierte Elektrode (514) umfasst.

3. Eyebox-Expander (330, 500, 800) nach Anspruch 2, wobei sich die strukturierte Elektrode (514) zwischen einer ersten Elektrode (512) und einer zweiten Elektrode (516) befindet, wobei sich optional die erste Flüssigkristallschicht (502, 802) zwischen der strukturierten Elektrode (514) und der zweiten Elektrode (516) befindet.

4. Eyebox-Expander (330, 500, 800) nach Anspruch 3, wobei die zweite Elektrode (516) Licht von der ersten Flüssigkristallschicht (502, 802) empfängt und Licht in Richtung einer Eyebox (404), die der WHMD (300) zugeordnet ist, basierend auf der Änderung der Ausrichtung, die der ersten Flüssigkristallschicht (502, 802) zugeordnet ist, überträgt.

5. Eyebox-Expander (330, 500, 800) nach Anspruch 2 bis 4, wobei die strukturierte Elektrode (514) eine Vielzahl von Elektrodenabschnitten umfasst, die angeordnet sind, um eine Öffnung zu bilden.

6. Eyebox-Expander (330, 500, 800) nach Anspruch 5, wobei die Elektrodenanordnung (510) die erste Spannung als eine Vielzahl von Spannungen an die Vielzahl von Elektrodenabschnitten der strukturierten Elektrode (514) anlegt.

7. Eyebox-Expander (330, 500, 800) nach einem der Ansprüche 3 bis 5, wobei die Elektrodenanordnung (510) dazu ausgelegt ist, die erste Spannung zwischen der zweiten Elektrode und der strukturierten Elektrode (514) anzulegen.

8. Eyebox-Expander (330, 500, 800) nach einem der Ansprüche 3 bis 7, wobei sich die Kompensationsschicht (504, 804) zwischen der ersten Elektrode (512) und der strukturierten Elektrode (514) befindet.

9. Eyebox-Expander (330, 500, 800) nach einem der Ansprüche 1 bis 8, wobei die Kompensationsschicht (504, 804) eine zweite Flüssigkristallschicht ist, wobei optional die Elektrodenanordnung (510) dazu ausgelegt ist, eine zweite Spannung an die zweite Flüssigkristallschicht anzulegen, basierend auf der ersten Spannung, die an die erste Kristallschicht (502, 802) angelegt wird.

10. Eyebox-Expander nach einem der Ansprüche 1 bis 9, wobei die Änderung der Ausrichtung, die der ersten Flüssigkristallschicht (502, 802) zugeordnet ist, ferner auf einer Augenbewegung des Benutzers basiert.

11. Eyebox-Expander (330, 500, 800) nach einem der Ansprüche 1 bis 10, wobei Lichteintritt in den Eyebox-Expander (330, 500, 800) von außerhalb der WHMD (300) und Lichtaustritt aus dem Eyebox-Expander (330, 500, 800) in Richtung eines Benutzers innerhalb eines Toleranzbereichs den gleichen Winkel aufweisen.

12. Linse für eine tragbare, am Kopf montierte Anzeige, WHMD, (300), umfassend:
ein erstes Substrat (306),
ein zweites Substrat (308) und
den Eyebox-Expander (330, 500, 800) nach Anspruch 1.

13. Linse nach Anspruch 12, ferner umfassend einen Wellenleiter (205), umfassend einen Einkoppler (212), einen Austrittspupillen-Expander und einen Auskoppler (214), wobei sich der Wellenleiter zwischen dem ersten Substrat (306) und dem zweiten Substrat (308) befindet, wobei optional der Eyebox-Expander (330, 500, 800) in den Einkoppler, den Austrittspupillen-Expander und den Auskoppler integriert oder teilweise darüber angeordnet ist.

14. Verfahren zum Lenken von Lichtstrahlen in einer Eyebox (404) einer tragbaren, am Kopf montierten Anzeige, WHMD, (300), wobei das Verfahren umfasst:
Anlegen einer ersten Spannung an eine erste Flüssigkristallschicht (502, 802), um eine Ausrichtung, die der ersten Flüssigkristallschicht (502, 802) zugeordnet ist, zu verändern, um Lichtstrahlen in der Eyebox (404) zu lenken, wobei die Änderung der Ausrichtung, die der ersten Flüssigkristallschicht (502, 802) zugeordnet ist, auf mindestens einer von einer Variation eines Pupillenabstands eines Benutzers der WHMD (300) oder einer Variation des Augenabstands zwischen der WHMD (300) und dem Benutzer basiert; und
Anlegen einer zweiten Spannung an eine zweite Flüssigkristallschicht (504, 804), um Licht, das durch eine Linse der WHMD (300) hindurchtritt, basierend auf der Änderung der Ausrichtung, die der ersten Flüssigkristallschicht (502, 802) zugeordnet ist, umzuleiten.

15. Verfahren nach Anspruch 14, ferner umfassend Anlegen der ersten Spannung in einer Reihe segmentierter Spannungen an die erste Flüssigkristallschicht (502, 802) über eine Elektrodenanordnung (510), umfassend eine erste Elektrode (512), eine strukturierte Elektrode (514) und eine zweite Elektrode (516), wobei sich die erste Flüssigkristallschicht (502, 802) optional zwischen der strukturierten Elektrode (514) und der zweiten Elektrode (516) befindet, und sich die zweite Flüssigkristallschicht (504, 804) zwischen der ersten Elektrode (512) und der strukturierten Elektrode (514) befindet, wobei die erste Flüssigkristallschicht (502, 802) in Richtung eines Benutzers der WHMD (300) näher liegt als die zweite Flüssigkristallschicht (504, 804).

## Revendications

1. Dispositif d'expansion de région oculaire (330, 500, 800) pour un dispositif d'affichage monté sur la tête portable, WHMD (wearable head mounted display), (300) comprenant :
une première couche de cristaux liquides (502, 802) ;
un dispositif d'électrodes (510) destiné à appliquer une première tension à la première couche de cristaux liquides (502, 802) afin de modifier une orientation associée à la première couche de cristaux liquides (502, 802), dans lequel le dispositif d'électrodes (510) est couplé à un dispositif de commande, le dispositif de commande étant configuré pour commander la première tension sur la base d'au moins l'une d'une variation de la distance interpupillaire d'un utilisateur du WHMD (300) ou d'une variation du dégagement oculaire entre le WHMD (300) et l'utilisateur ; et
une couche de compensation (504, 804) pour rediriger la lumière passant à travers le dispositif d'expansion de région oculaire (330, 500, 800) sur la base de la modification de l'orientation associée à la première couche de cristaux liquides (502, 802).

2. Dispositif d'expansion de région oculaire (330, 500, 800) selon la revendication 1, dans lequel le dispositif d'électrodes (510) comprend une électrode à motifs (514).

3. Dispositif d'expansion de région oculaire (330, 500, 800) selon la revendication 2, dans lequel l'électrode à motifs (514) est située entre une première électrode (512) et une seconde électrode (516), dans lequel, éventuellement, la première couche de cristaux liquides (502, 802) est située entre l'électrode à motifs (514) et la seconde électrode (516).

4. Dispositif d'expansion de région oculaire (330, 500, 800) selon la revendication 3, dans lequel la seconde électrode (516) reçoit la lumière de la première couche de cristaux liquides (502, 802) et transmet la lumière vers une région oculaire (404) associée au WHMD (300) sur la base de la modification de l'orientation associée à la première couche de cristaux liquides (502, 802).

5. Dispositif d'expansion de région oculaire (330, 500, 800) selon la revendication 2 à 4, dans lequel l'électrode à motifs (514) comprend une pluralité de sections d'électrodes disposées pour former une ouverture.

6. Dispositif d'expansion de région oculaire (330, 500, 800) selon la revendication 5, dans lequel le dispositif d'électrodes (510) applique la première tension sous forme d'une pluralité de tensions à travers la pluralité de sections d'électrodes de l'électrode à motifs (514).

7. Dispositif d'expansion de région oculaire (330, 500, 800) selon l'une quelconque des revendications 3 à 5, dans lequel le dispositif d'électrodes (510) est configuré pour appliquer la première tension entre la seconde électrode et l'électrode à motifs (514).

8. Dispositif d'expansion de région oculaire (330, 500, 800) selon l'une quelconque des revendications 3 à 7, dans lequel la couche de compensation (504, 804) est située entre la première électrode (512) et l'électrode à motifs (514).

9. Dispositif d'expansion de région oculaire (330, 500, 800) selon l'une quelconque des revendications 1 à 8, dans lequel la couche de compensation (504, 804) est une seconde couche de cristaux liquides, dans lequel, éventuellement, le dispositif d'électrodes (510) est configuré pour appliquer une seconde tension à la seconde couche de cristaux liquides sur la base de la première tension appliquée à la première couche de cristaux (502, 802).

10. Dispositif d'expansion de région oculaire selon l'une quelconque des revendications 1 à 9, dans lequel la modification de l'orientation associée à la première couche de cristaux liquides (502, 802) est en outre basée sur un mouvement oculaire de l'utilisateur.

11. Dispositif d'expansion de région oculaire (330, 500, 800) selon l'une quelconque des revendications 1 à 10, dans lequel l'entrée de lumière dans le dispositif d'expansion de région oculaire (330, 500, 800) depuis l'extérieur du WHMD (300) et la sortie de lumière du dispositif d'expansion de région oculaire (330, 500, 800) dans une direction vers un utilisateur ont le même angle dans une marge de différence.

12. Lentille pour un dispositif d'affichage monté sur la tête portable, WHMD, (300) comprenant :
un premier substrat (306),
un second substrat (308), et
le dispositif d'expansion de région oculaire (330, 500, 800) selon la revendication 1.

13. Lentille selon la revendication 12, comprenant en outre un guide d'ondes (205) comprenant un coupleur d'entrée (212), un dispositif d'expansion de pupille de sortie et un coupleur de sortie (214), le guide d'ondes étant situé entre le premier substrat (306) et le second substrat (308), dans lequel, éventuellement, le dispositif d'expansion de région oculaire (330, 500, 800) est intégré à ou partiellement disposé sur chacun des coupleurs d'entrée, des dispositifs d'expansion de pupille de sortie et des coupleurs de sortie.

14. Procédé d'orientation de faisceaux lumineux dans une région oculaire (404) d'un dispositif d'affichage monté sur la tête portable, WHMD, (300) le procédé comprenant :
l'application d'une première tension à une première couche de cristaux liquides (502, 802) afin de modifier une orientation associée à la première couche de cristaux liquides (502, 802) pour orienter les faisceaux lumineux dans la région oculaire (404), dans lequel la modification de l'orientation associée à la première couche de cristaux liquides (502, 802) est basée sur au moins l'une d'une variation d'une distance interpupillaire d'un utilisateur du WHMD (300) ou d'une variation du dégagement oculaire entre le WHMD (300) et l'utilisateur ; et
l'application d'une seconde tension à une seconde couche de cristaux liquides (504, 804) pour rediriger la lumière passant à travers une lentille du WHMD (300) sur la base de la modification de l'orientation associée à la première couche de cristaux liquides (502, 802).

15. Procédé selon la revendication 14, comprenant en outre l'application de la première tension dans une série de tensions segmentées à la première couche de cristaux liquides (502, 802) via un dispositif d'électrodes (510) comprenant une première électrode (512), une électrode à motifs (514) et une seconde électrode (516), dans lequel, éventuellement, la première couche de cristaux liquides (502, 802) est située entre l'électrode à motifs (514) et la seconde électrode (516), et la seconde couche de cristaux liquides (504, 804) est située entre la première électrode (512) et l'électrode à motifs (514), dans lequel la première couche de cristaux liquides (502, 802) est située plus près dans la direction d'un utilisateur du WHMD (300) que la seconde couche de cristaux liquides (504, 804).
